# EUROPÄISCHE PATENTSCHRIFT

(11) **EP 3 202 290 B1**
(45) Veröffentlichungstag und Bekanntmachung des Hinweises auf die Patenterteilung: **08.01.2020**
(21) Anmeldenummer: 16200426.1
(22) Anmeldetag: 24.11.2016
(51) Int. Cl.: A47J 31/42, A47J 42/38, A47J 42/06

(54) **MAHLWERK, MÜHLE, KAFFEEZUBEREITUNGSVORRICHTUNG MIT MÜHLE SOWIE MAHLVERFAHREN**
GRINDER, MILL, DEVICE FOR PREPARING COFFEE WITH A MILL AND METHOD OF MILLING
BROYEUSE, MOULIN, DISPOSITIF DE PRÉPARATION DE CAFÉ COMPRENANT UN BROYEUR ET PROCÉDÉ DE BROYAGE

(30) Priorität: 03.02.2016 DE 102016101839
(43) Veröffentlichungstag der Anmeldung: 09.08.2017
(73) Patentinhaber: Eugster/Frismag AG, 8580 Amriswil (CH)
(72) Erfinder: Kern, Patrick, 9200 Gossau (CH)
(74) Vertreter: Patentanwälte Behrmann Wagner PartG mbB

(56) Entgegenhaltungen:
- EP-A1- 2 050 375
- EP-A1- 2 767 201
- CN-U- 202 981 635

## Beschreibung

Die Erfindung betrifft ein Mahlwerk gemäß dem Oberbegriff des Anspruchs 1 zum Mahlen von Mahlgut, insbesondere Kaffeebohnen, mit einem Mahlring und einem innerhalb des Mahlrings angeordneten, bevorzugt als Mahlkegel ausgebildeten, Mahlelement, wobei Mahlring und Mahlelement, insbesondere mittels eines elektromotorischen Antriebs, relativ zueinander um eine Rotationsachse verdrehbar sind, um in einem vom dem Mahlring und dem Mahlelement begrenzten ersten Mahlspalt Mahlgut, insbesondere Kaffeebohnen, zu mahlen. Bevorzugt ist oberhalb des Mahlelementes, insbesondere drehfest mit diesem verbunden, ein Förderelement, insbesondere eine Förderschnecke angeordnet, um Kaffeebohnen aus einem oberhalb des Mahlwerks angeordneten Bereich beim Mahlgut in Richtung des ersten Mahlspaltes zu bewegen, wobei dem ersten Mahlspalt ein, bevorzugt entlang der vertikalen Rotationsachse darunter angeordneter, zweiter Mahlspalt nachgeordnet ist, um das aus dem ersten Mahlspalt austretende, vorgemahlene Mahlgut weiter (auf die gewünschte Korngröße insbesondere zum Einsatz in Brüheinheiten von Kaffeemaschinen) zu verkleinern.

Zudem betrifft die Erfindung eine Mühle gemäß Anspruch 14.

Ferner betrifft die Erfindung eine Kaffeemaschine gemäß Anspruch 15, sprich einen sogenannten Kaffeevollautomaten, der neben einer Brüheinrichtung zum Auslaugen von mittels eines Mahlwerks gemahlenen Kaffeebohnen, d.h. Kaffeemehl eine erfindungsgemäße Mühle zum Bereitstellen des Kaffeemehls umfasst.

Darüber hinaus betrifft die Erfindung ein Mahlverfahren gemäß dem Oberbegriff des Anspruchs 16 zum Mahlen von Mahlgut, insbesondere Kaffeebohnen unter Verwendung eines erfindungsgemäßen Mahlwerks, wobei im Rahmen des Verfahrens, insbesondere mittels eines Förderelementes, dem ersten Mahlspalt Mahlgut zugeführt und in diesem vorgemahlen wird.

Ein typisches Mahlwerk für eine Kaffeemaschine ist beispielsweise in der WO 2013/185945 A1 beschrieben. Das bekannte Mahlwerk umfasst einen einzigen, zwischen einem Mahlkegel und einem hierzu rotierbar angetriebenen Mahlring ausgebildeten Mahlspalt, aus welchem das Mahlgut in axialer Richtung nach unten austritt.

Eine alternative Kaffeemühle ist in der DE 10 2006 032 710 A1 beschrieben - bei der bekannten Mahlvorrichtung ist nicht der Mahlring, sondern der darin befindliche Mahlkegel elektromotorisch angetrieben, der mit dem Mahlring den einzigen Mahlspalt des Mahlwerks begrenzt.

Mit bekannten Mahlwerken ist es in der Praxis schwierig mittels des einzigen Mahlspaltes einheitlich eine optimale Korngröße des gemahlenen Mahlgutes, insbesondere des Kaffeemehls, einzuhalten. Bevorzugt soll diese Korngröße zu einem großen Prozentsatz im Bereich um 600 µm gehalten werden. Darüber hinaus besteht das Problem, dass bei bekannten Mahlwerken ein auch als Staub bezeichneter hoher Feinanteil zu verzeichnen ist, welcher auf Dauer zu Verstopfungen im Bereich der Brüheinheit, insbesondere im Bereich des dort üblicherweise vorgesehenen Brühsiebes führen kann. Zudem leiden bekannte Mahlwerke unter einem vergleichsweise großen Verschleiß der zu einer verkürzten Lebensdauer führt.

Aus der CN 202981635 U, der EP 2 767 201 A1 und der EP 2 050 375 A1 sind Mahlwerke bekannt, bei denen sich ein Mahlkegel in axialer Richtung von unten nach oben im Hinblick auf seine Radialerstreckung verjüngt.

Ausgehend von dem vorgenannten Stand der Technik liegt der Erfindung daher die Aufgabe zugrunde, ein verbessertes Mahlwerk, insbesondere für Kaffeebohnen anzugeben, welches ein möglichst einheitliches Mahlergebnis mit geringem Feinanteil (Staubanteil) liefert und bei dem der Verschleiß reduziert und daher eine höhere Lebensdauer zu erwarten ist.

Ferner besteht die Aufgabe darin eine ein solches Mahlwerk umfassende Mühle sowie eine Kaffeemaschine (Kaffeevollautomat) mit einem derartig verbesserten Mahlwerk bzw. einer derartig verbesserten Mühle anzugeben. Auch besteht die Aufgabe darin, ein verbessertes Mahlverfahren unter Verwendung eines derartig verbesserten Mahlwerks anzugeben.

Diese Aufgabe wird hinsichtlich des Mahlwerks mit den Merkmalen des Anspruchs 1 gelöst.

Hinsichtlich der Mühle wird die Aufgabe mit den Merkmalen des Anspruchs 14 gelöst.

Hinsichtlich der Kaffeemaschine wird die Aufgabe mit den Merkmalen des Anspruchs 15 durch den Einsatz eines erfindungsgemäßen Mahlwerks bzw. einer erfindungsgemäßen Mühle gelöst.

Hinsichtlich des Verfahrens wird die Aufgabe mit den Merkmalen des Anspruchs 16 gelöst.

Im Rahmen der Offenbarung sind die Begriffe "oben" und "unten" bezogen auf eine bevorzugte, vertikale Orientierung des Mahlwerks bzw. der Rotationsachse, die sich dann senkrecht zu einer horizontalen Aufstellfläche, einer das Mahlwerk umfassenden Vorrichtung, insbesondere einer Mühle oder einer Kaffeezubereitungsvorrichtung erstreckt.

Vorteilhafte Weiterbildungen der Erfindung sind in den Unteransprüchen angegeben. In den Rahmen der Erfindung fallen sämtliche Kombinationen aus zumindest zwei von in der Beschreibung, den Ansprüchen und/oder den Figuren offenbarten Merkmalen.

Der Erfindung liegt der Gedanke zugrunde, zusätzlich zu dem bisher üblichen von einem Mahlring und einem Mahlelement, insbesondere einem Mahlkegel begrenzten ersten Mahlspalt, einen weiteren (zweiten) Mahlspalt vorzusehen, der dem ersten Mahlspalt nachgeordnet ist, insbesondere derart, dass das aus dem ersten Mahlspalt austretende Mahlgut, insbesondere über einen später noch zu erläuternden Zwischenbereich bei Betrieb des Mahlwerks automatisch, insbesondere nach unten in den zweiten Mahlspalt, gefördert wird bzw. rutschen kann, um das im ersten Mahlspalt vorgemahlene Mahlgut weiter zu zerkleinern. Durch das Vorsehen eines zweiten Mahlspaltes erhält das Mahlwerk erfindungsgemäß mindestens eine weitere Mahlstufe, wodurch die Einstellung einer optimalen Korngröße in einen großen Prozentbereich erleichtert wird. Besonders bevorzugt ist es, wenn der zweite Mahlspalt in einem axial entlang der Rotationsachse zu dem ersten Mahlspalt benachbarten, insbesondere beabstandeten Bereich (je nach Ausgestaltung bzw. Verlauf des ersten Mahlgutes) in radialer Richtung nach innen oder außen axial unterhalb, d.h. durch eine axiale Projektionsfläche des ersten Mahlspaltes verläuft, insbesondere bis zu einem radial äußeren Bereich, der in radialer Richtung betrachtet von dem ersten Mahlspalt beabstandet ist.

Da die vollständige Mahlung nicht wie bisher in Kaffeebohnen-mahlwerken üblich in einem einzigen Mahlspalt vollzogen werden muss, sondern vorgemahlenes Mahlgut in dem erfindungsgemäß vorgesehenen zweiten Mahlspalt weiter zerkleinert wird, verlängert sich insgesamt der Mahlweg, was zu einer schonenden und gleichmäßigen Verteilung führt, wobei gleichzeitig der Feinanteil (Staubanteil) deutlich reduziert wird. Bevorzugt ist hierzu das Spaltmaß an der engsten Stelle des zweiten Mahlspaltes geringer als das Spaltmaß an der engsten Stelle im ersten Mahlspalt. Ein weiterer wesentlicher Vorteil des erfindungsgemäßen Mahlwerks besteht darin, dass aufgrund des längeren, auf mindestens zwei Mahlspalte verteilten Mahlwegs (zwischen dem Eingang des Mahlwerks und dem Ausgang) die Krafteinwirkung auf die Komponenten des Mahlwerks besser verteilt und dadurch der Verschleiß reduziert wird, was zu einer erhöhten Lebensdauer führt. Zur weiteren Minimierung des Verschleißes bzw. zur Gewährleistung einer hohen Lebensdauer ist es von Vorteil, wenn Mahlring und Mahlelement aus einem keramischen Werkstoff oder aus Metall ausgebildet sind.

Aus Gründen einer vereinfachten Montage und zur Gewährleistung eines individuellen Austauschs von Komponenten im Rahmen eines Kundendienstes ist es bevorzugt, wenn der zweite Mahlspalt zumindest abschnittweise von einem zusätzlich zu dem Mahlelement und dem Mahlring vorgesehenen Bauteil, d.h. einer Mahlscheibe begrenzt ist, die entlang der Rotationsachse benachbart zu dem Mahlkegel und/oder dem Mahlring angeordnet ist, insbesondere derart, dass sich die Mahlscheibe zumindest abschnittsweise unterhalb des Mahlelementes und/oder des Mahlrings angeordnet ist, bevorzugt um mit zumindest einem dieser Teile den zweiten Mahlspalt zu begrenzen. Besonders bevorzugt ist es, wenn der zweite Mahlspalt zusätzlich zu der Mahlscheibe von dem Mahlring, insbesondere einer Unterseite des Mahlrings begrenzt ist, wobei es alternativ auch denkbar ist, zusätzlich zu dem Mahlring ein, bevorzugt unterhalb des Mahlrings angeordnetes und weiter bevorzugt mit diesem drehfest gekoppeltes Mahlteil vorzusehen, welches zusammen mit der Mahlscheibe den zweiten Mahlspalt begrenzt. Bevorzugt ist die Mahlscheibe dabei aus Metall oder einem keramischen Werkstoff ausgebildet.

Wie später noch erläutert werden wird ist es alternativ möglich, Mahlelement, insbesondere Mahlkegel, und Mahlscheibe monolithisch, d.h. in einem Stück auszubilden und mit dem Mahlring zu kombinieren, der aus Montagegründen bei einer solchen Ausführungsform bevorzugt aus mehreren, insbesondere mindestens zwei in Umfangsrichtung benachbarten Mahlringteilen, zusammengesetzt ist.

Insgesamt ist zur Realisierung von einem zweiten, zusätzlich zu dem ersten Mahlspalt vorgesehenen Mahlspalt erfindungsgemäß vorgesehen, dass die Kombination aus Mahlelement und Mahlscheibe (unabhängig von einer separaten oder monolithischen Bauweise) einen engsten Durchmesserbereich des Mahlrings axial entlang der Rotationsachse durchsetzt und zu beiden Axialseiten dieses engsten Durchmesserbereichs (engster Ringabschnitt) diesen in radialer Richtung nach außen überragt. Anders ausgedrückt durchsetzt die Kombination aus Mahlelement und Mahlscheibe erfindungsgemäß eine radiale Einschnürung des Mahlrings zu zwei Axialseiten entlang der Rotationsachse, um sich auf diesen beiden Axialseiten wieder in einen Bereich nach radial außen über den engsten Durchmesserbereich zu erstrecken. Zur Realisierung einer solchen, erfindungsgemäßen Ausführungsform können Mahlelement und Mahlscheibe, wie erwähnt, als voneinander separate Bauteile ausgebildet sein und insbesondere axial, d.h. von zwei einander gegenüberliegenden Seiten des engsten Durchmesserbereichs des Mahlrings her zusammengefügt, insbesondere, wie später noch erläutert wird drehfest gekoppelt werden. Bei einer alternativen erfindungsgemäßen Ausführungsvariante können, wie ebenfalls bereits erwähnt, Mahlscheibe und Mahlelement monolithisch (einteilig) ausgebildet sein oder aus mehreren in Umfangsrichtung benachbarten Teilen zusammengesetzt sein, wobei in diesem Fall, um den engsten Durchmesserbereich des Mahlrings zu durchsetzten, der Mahlring in Umfangsrichtung mehrteilig ausgebildet ist, d.h. aus mehreren Mahlringteilen zusammengesetzt ist, die in Summe den engsten Durchmesserbereich ausbildenden Mahlring ergeben bzw. begrenzen, der dann axial von den monolithischen oder der in Umfangsrichtung mehrteiligen Kombination aus Mahlscheibe und Mahlelement, insbesondere Mahlkegel durchsetzt ist.

Ganz besonders bevorzugt ist es, wenn sich der vorerwähnte engste Durchmesserbereich des Mahlrings, unabhängig davon, ob dieser von mehreren Ringteilen (Ringsegmenten) oder einem einteiligen Mahlrings gebildet wird, axial entlang der Rotationsachse zwischen dem ersten und dem zweiten Mahlspalt angeordnet ist, wobei es ganz besonders bevorzugt ist, wenn sich beide Mahlspalte zumindest abschnittsweise, vorzugsweise vollständig in einen Bereich radial außerhalb dieses engsten Durchmesserbereichs befinden.

Erfindungsgemäß ist gemäß einer ersten Alternative, wie bereits angedeutet, vorgesehen, dass die vorgenannte, bevorzugt unterhalb des Mahlelementes und/oder des Mahlrings angeordnete Mahlscheibe drehfest mit dem Mahlelement gekoppelt ist, insbesondere in einem zentrischen Bereich entlang der Rotationsachse, wobei sich die Mahlscheibe weiter bevorzugt von dem zentrischen Kopplungsbereich in radial Richtung nach außen in einen Bereich unterhalb des Mahlrings erstreckt und dort entweder unmittelbar mit dem Mahlring oder einem vorerwähnten, zusätzlich vorgesehenen Mahlteil den zweiten Mahlspalt begrenzt. Die drehfeste Kopplung der Mahlscheibe mit dem bevorzugt als Mahlkegel ausgebildeten Mahlelement hat den Vorteil, dass, was in Weiterbildung der Erfindung mit Vorteil vorgesehen ist, auch separat voneinander ausgebildete, Mahlscheibe und Mahlelement mit einem gemeinsamen, insbesondere elektromotorischen, Antrieb relativ zu dem dann bevorzugt feststehend angeordneten Mahlring verdrehbar sind. Alternativ ist es möglich, durch die Kopplung mit einem entsprechenden Antrieb den Mahlring anzutreiben und zwar relativ zu dem dann bevorzugt feststehenden Mahlelement und der bevorzugt feststehenden Mahlscheibe. Die Kopplung von Mahlscheibe und Mahlelement ist bevorzugt unmittelbar zwischen den Bauteilen durch axiales Ineinandergreifen realisiert - grundsätzlich ist jedoch auch eine mittelbare drehfeste Kopplung über mindestens ein weiteres Bauteil realisierbar. Für den Fall der alternativen einteiligen Ausbildung von Mahlscheibe und Mahlelement wird dieses Bauteil bevorzugt von dem Antrieb relativ zu dem dann bevorzugt ortsfesten Mahlring angetrieben.

Alternativ zu einer axialen Kopplung von Mahlscheibe und Mahlelement ist es erfindungsgemäß als zweite alternative Ausführungsform vorgesehen, Mahlscheibe und Mahlelement zumindest in axialer Richtung monolithisch, insbesondere vollständig monolithisch auszubilden oder aus, bevorzugt axial durchgehenden, in Umfangsrichtung benachbarten Teilen zusammenzusetzen, dann jeweils in Kombination mit einem in Umfangsrichtung betrachtet mehrteiligen, aus mehreren Ringelementen zusammengesetzten, Mahlring.

Als besonders zweckmäßig hat es sich herausgestellt, wenn sich der erste Mahlspalt hin zu dem zweiten Mahlspalt und/oder hin zu einem Zwischenbereich verjüngt, in welchen das im ersten Mahlspalt vorzerkleinerte Mahlgut, bevorzugt im Wesentlichen in axialer Richtung austreten kann, wobei der Zwischenbereich sich durch ein größeres, insbesondere in radialer Richtung gemessenes Spaltmaß auszeichnet, als der erste Mahlspalt in seinem ersten Mahlabschnitt - es handelt sich also um einen verbreiterten Abschnitt auf dem Mahlweg des Mahlgutes vom Eingangsbereich des Mahlwerks zum Ausgangsbereich. Der Zwischenbereich ist bevorzugt derart angeordnet, dass das diesen durchlaufende, insbesondere durchrutschende, vorzerkleinerte Mahlgut aus dem Zwischenbereich in den zweite Mahlspalt gelangt, und dort weiter zerkleinert wird, indem sich der zweite Mahlspalt ausgehend von dem Zwischenbereich in Richtung eines zweiten Mahlspaltauslasses, der bevorzugt gleichzeitig einen Mahlwerkauslass bildet, verjüngt.

Besonders zweckmäßig ist es, wenn der Zwischenbereich zwischen dem ersten und dem zweiten Mahlspalt als Umlenkbereich ausgebildet ist, also als ein Bereich, in dem das vorgemahlene Mahlgut einen Richtungswechsel erfährt, insbesondere derart, dass das vorgemahlene Mahlgut von einer, bevorzugt im wesentlichen axialen Eingangsbewegungsrichtung in den Zwischenbereich in radialer Richtung, insbesondere in radialer Richtung nach außen in den zweiten Mahlspalt umgelenkt wird. Um einen guten Mahlgutfluss zu gewährleisten, hat es sich als vorteilhaft herausgestellt, wenn der zweite Mahlspalt in seinem, bevorzugt einem vorgenannten Zwischenbereich zugewandten Einlassbereich eine größere Spaltbreite aufweist als der erste Mahlspalt in seinem engsten Bereich, um somit das vorgemahlene Mahlgut langsam in der Spaltverlaufsrichtung, bevorzugt im Wesentlichen in radialer Richtung in dem zweiten Mahlspalt einziehen zu können. Insgesamt ist es von Vorteil, wenn der zweite Mahlspalt in seinem engsten Mahlabschnitt ein geringeres Spaltmaß (Abstand zwischen den relativ zueinander verdrehten Komponenten, insbesondere der Mahlscheibe und dem Mahlring) aufweist als der erste Mahlspalt in seinem engsten Mahlabschnitt, wobei der engste Mahlabschnitt des ersten Mahlspaltes bevorzugt begrenzt wird von dem Mahlelement und dem radial außerhalb von diesem befindlichen Mahlring.

Um das vorzerkleinerte Mahlgut aktiv anzutreiben bzw. zu bewegen, um eine Verstopfung in dem vorgenannten Zwischenbereich zu vermeiden, hat es sich als besonders vorteilhaft herausgestellt, wenn dem Zwischenbereich rotierbare, insbesondere am Mahlelement und/oder der Mahlscheibe angeordnete, Mitnahmemittel zum Mitnehmen von vorzerkleinertem Mahlgut zugeordnet sind. Hierbei kann es sich beispielsweise um eine Verzahnung handeln, die bevorzugt in einem unteren Bereich des Mahlelementes und/oder in einem oberen Bereich der Mahlscheibe, insbesondere im Kopplungsbereich und/oder Übergangsbereich von Mahlscheibe und Mahlelement angeordnet ist. Bevorzugt ist es dabei, wenn die Mitnahmemittel, insbesondere die Verzahnung, den Zwischenbereich, insbesondere radial innen, unmittelbar begrenzt. Bevorzugt umfasst die Verzahnung eine Mehrzahl von in Umfangsrichtung um die Rotationsachse beabstandete und nach radial innen ragende und sich bevorzugt axial entlang der Rotationsachse erstreckende Zähne. Besonders zweckmäßig ist es, wenn sowohl ein Verzahnungsabschnitt am Mahlelement als auch axial dazu benachbart, weiter bevorzugt unmittelbar angrenzend an der Mahlscheibe, insbesondere an einem axialen zentrischen Fortsatz der Mahlscheibe angeordnet ist.

Wie bereits erläutert ist es bevorzugt, wenn Mahlgut innerhalb des ersten Mahlspaltes im Wesentlichen in axialer Richtung nach unten und innerhalb des zweiten Mahlspaltes im Wesentlichen in radialer Richtung nach außen wandert. Ganz besonders bevorzugt ist es, wenn der erste Mahlspalt entlang einer ersten, bevorzugt im Wesentlichen axialen, Mahlachse erstreckt, die mit einer zweiten Mahlachse, entlang der sich der zweite Mahlspalt erstreckt einen Winkel einschließt. Bevorzugt verläuft die zweite Mahlachse bezogen auf eine Radialebene, insbesondere eine Horizontalebene, flacher als die erste Mahlachse, insbesondere zumindest näherungsweise in radialer Richtung.

Besonders zweckmäßig ist es, wenn die erste Mahlachse mit der Rotationsachse einen ersten Winkel einschließt oder parallel zu dieser ausgerichtet ist und die zweite Mahlachse mit der Rotationsachse einen zweiten Winkel einschließt, wobei der zweite Winkel bevorzugt größer ist als der erste Winkel. Unter dem ersten bzw. zweiten Winkel wird dabei bevorzugt jeweils der Winkel verstanden, der aufgespannt wird zwischen der jeweiligen Achse und einem ausgehend von einem Schnittpunkt dieser Achse mit der Rotationsachse nach oben erstreckenden Rotationsachsenabschnitt.

Die erste Mahlachse kann insbesondere als Verbindungslinie bestimmt werden zwischen einer radialen Mitte zwischen dem Mahlelement und dem Mahlring in einem Eingangsbereich des ersten Mahlspaltes und der radialen Mitte des Abstandes (Spalt zwischen dem Mahlelement und dem Mahlring im Bereich des engsten Spaltmaßes des ersten Mahlrings).

Analog kann die zweite Mahlachse bevorzugt bestimmt werden als Verbindungslinie zwischen einer axialen Mitte des Einlassspaltes des zweiten Mahlspaltes und der axialen Mitte des zweiten Mahlspaltes im engsten Bereich des engsten Spaltmaßes, insbesondere als Verbindungslinie zwischen dem axialen Abstand einer Mahlscheibe und dem Mahlring oder einem zusätzlichen vorgesehenen Mahlteil im Eingangsbereich des zweiten Mahlspaltes und der axialen Mitte des Abstandes dieser Bauteile im Bereich des engsten Spaltmaßes des zweiten Mahlspaltes.

Wie bereits angedeutet, ist es besonders bevorzugt, wenn der erste Mahlspalt in axialer Richtung ausmündet, insbesondere in einen vorerwähnten Zwischenbereich hinein, so dass das Mahlgut also in axialer Richtung aus einem Bereich zwischen dem Mahlkegel und dem Mahlelement austritt. Besonders zweckmäßig ist es, wenn der zweite Mahlspalt in radialer Richtung ausmündet, also in radialer Richtung austritt zwischen einem den zweiten Mahlspalt in axialer Richtung nach unten begrenzenden Bauteil, insbesondere der Mahlscheibe und einem axial darüber befindlichen Bauteil. Als besonders zweckmäßig hat es sich herausgestellt, wenn eine vorerwähnte zweite Mahlachse mit einer sich senkrecht zur Rotationsachse erstreckenden Radialebene einen Winkel zwischen 2° und 45°, bevorzugt zwischen 2° und 20° einschließt, wobei der zweite Mahlspalt bevorzugt (leicht) nach unten geneigt ist. Grundsätzlich sind auch Winkel größer als 45° realisierbar.

Bevorzugt wird der zweite Mahlspalt begrenzt von einem oberen, insbesondere am Mahlring oder einem darunter befindlichen Bauteil ausgebildeten, oberen Mahlprofil und einem davon über das Spaltmaß beabstandeten unteren Mahlprofil, welches bevorzugt an einer oberen Stirnseite einer vorerwähnten Mahlscheibe angeordnet ist. Jedenfalls ist es (unabhängig von der konkreten Anordnung der Mahlprofile) von Vorteil, wenn das untere und/oder das obere Mahlprofil (jeweils) eine Mehrzahl von in Umfangsrichtung um die Rotationsachse beabstandeten und sich entlang der Mahlspalterstreckung erstreckenden Mahlflanken aufweist, die also von dem jeweiligen Bauteil, insbesondere im Wesentlichen in axialer Richtung in den zweiten Mahlspalt hineinragen und diesen somit verengen. Dabei ist es besonders vorteilhaft, wenn diese im Wesentlichen axial ansteigenden Mahlflanken so angeordnet sind, dass jeweils zwei in Umfangsrichtung beabstandete der Mahlflanken einen Mahlgutkanal begrenzen entlang dessen Mahlgut entlang der zweiten Mahlspaltlängserstreckung wandern kann.

Weiter bevorzugt ist es, wenn die Mahlflankenkanten, d.h. die Stirnseiten bzw. Schneidkanten der Mahlflanken zur Vergrößerung von deren wirksamer Oberfläche einen gewählten Verlauf aufweisen, wobei sich Wellenberge und Wellentäler in axialer Richtung entlang der Rotationsachse erstrecken. Anders ausgedrückt haben die Mahlflankenkanten des zweiten Mahlspaltes von radial außen nach radial innen betrachtet einen sich abwechselnd nach oben und unten bzw. axial nach oben und unten ändernden, gewellten Verlauf, wobei es besonders bevorzugt ist, dass beim Relativverdrehen vom oberen und unteren Mahlprofil Wellenberge des oberen Profils durch Wellentäler des unteren Mahlprofils in Umfangsrichtung bewegt werden. Durch die Vergrößerung der wirksamen Oberfläche mittels des gewellten Verlaufs, wird die Schneid- bzw. Mahlfläche weiter vergrößert, was wiederum einer erhöhten Lebensdauer zuträglich ist.

Als besonders zweckmäßig hat es sich herausgestellt, wenn die oberen und die unteren Mahlflanken (mit oder ohne Wellung) nicht geradlinig nach radial außen verlaufen, sondern jeweils in Umfangsrichtung gekrümmt sind, wobei obere und untere Mahlflanken bevorzugt gegenläufig, d.h. in einander entgegengesetzte Umfangsrichtungen gekrümmt sind, um somit eine verbesserte Scherwirkung zu erreichen.

Als besonders zweckmäßig hat es sich herausgestellt, wenn die vorerwähnten, jeweils von zwei in Umfangsrichtung beabstandeten Mahlflanken begrenzten Kanäle, insbesondere jeweils in eine Endmahlstufe ausmünden, die eine Vielzahl von in Umfangsrichtung nebeneinander angeordneten Keilprofilelement aufweist, wobei mindestens einem der Kanäle, bevorzugt jedem der Kanäle, eine Vielzahl von Keilprofilelementen zugeordnet ist.

Zur Vermeidung von Wiederholungen sollen vorrichtungsgemäß offenbarte Merkmale als verfahrensgemäß offenbart gelten und beanspruchbar sein, ebenso sollen verfahrensgemäß offenbarte Merkmale auch als vorrichtungsgemäß offenbart gelten und beanspruchbar sein.

Weitere Vorteile, Merkmale und Einzelheiten der Erfindung ergeben sich aus der nachfolgenden Beschreibung bevorzugter Ausführungsbeispiele sowie anhand der Zeichnungen.

Diese zeigen in:
- Fig. 1: eine Explosionsdarstellung einer bevorzugten Ausführungsvariante eines nach dem Konzept der Erfindung ausgebildeten Mahlwerks,
- Fig. 2: das Mahlwerk gemäß Fig. 1 im montierten Zustand,
- Fig. 3: eine Schnittdarstellung des Mahlwerks gemäß Fig. 2 in der Schnittebene S1,
- Fig. 4: eine Darstellung wesentlicher Komponenten des Mahlwerks gemäß den Fig. 1 bis 3, nämlich eines Mahlrings, eines darin befindlichen, als Mahlkegel ausgebildeten Mahlelementes sowie einer darunter befindlichen Mahlscheibe,
- Fig. 5: eine Schnittlinie entlang der Schnittebene S2 gemäß Fig. 4,
- Fig. 6: eine Explosionsdarstellung der Komponenten der Darstellungen gemäß den Figuren 4 und 5,
- Fig. 7 und Fig. 8: Details (Einzelheiten) A bzw. B aus Fig. 6.

In den Figuren sind gleiche Elemente und Elemente mit der gleichen Funktion mit den gleichen Bezugszeichen gekennzeichnet.

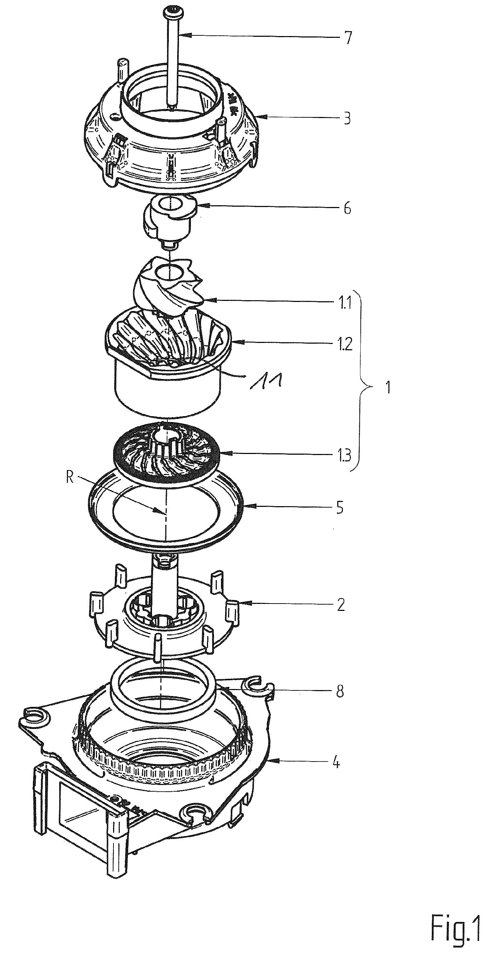

In Fig. 1 ist eine als Kaffeemühle ausgebildete Mühle zur Integration in einer als Kaffeevollautomaten ausgebildeten Kaffeezubereitungsvorrichtung gezeigt. Die Mühle umfasst ein aus mehreren Komponenten zusammengesetztes Mahlwerk 1. Bei diesen Komponenten handelt es sich um ein als Mahlkegel ausgebildetes Mahlelement 1.1, welches im montierten Zustand innerhalb eines Mahlrings 1.2 aufgenommen ist. Ferner umfasst das Mahlwerk 1 eine entlang einer Rotationsachse R unterhalb des Mahlrings 1.2 sowie des Mahlelementes angeordnete Mahlscheibe 1.3, wobei ein später noch zu erläuternder Mahlspalt von dem Mahlelement 1.1 und dem Mahlring 1.2 und ein zweiter, nachgeordneter Mahlspalt von der Mahlscheibe 1.3 und einer Unterseite des Mahlrings 1.2 gebildet werden.

In dem gezeigten Ausführungsbeispiel sind Mahlelement 1.1 und Mahlscheibe 1.3 in axialer Richtung drehfest miteinander verbunden und können auf diese Weise mit einem gemeinsamen, nicht gezeigten Antrieb relativ zu dem feststehend angeordneten Mahlring 1.2 rotiert werden, wobei alternativ bei entsprechender Anordnung des Antriebs der Mahlring 1.2. relativ zu dem dann feststehenden Mahlscheibe 1.3 rotierbar ist.

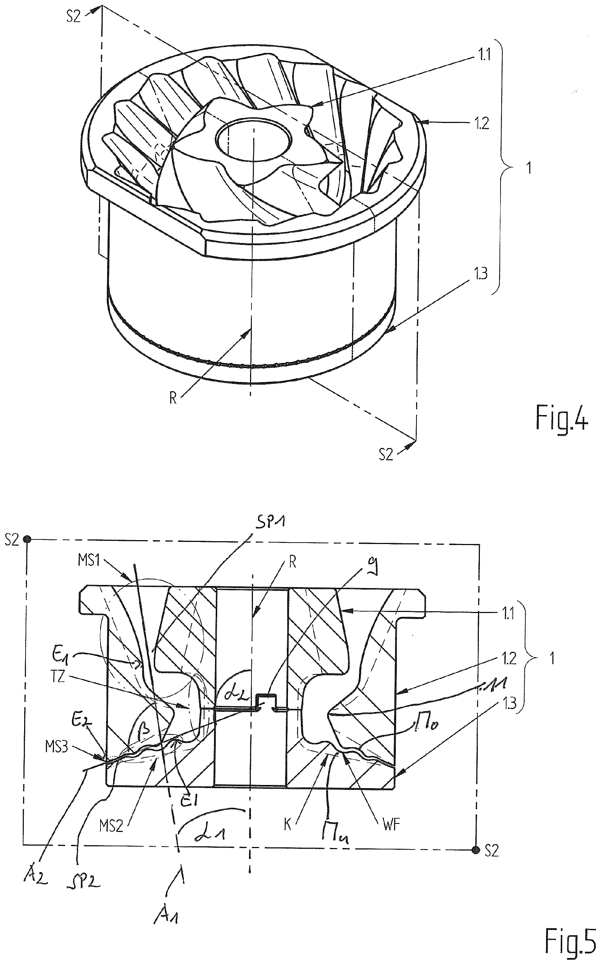

Mahlelement 1.1 und Mahlscheibe 1.3 durchsetzen axial entlang der Rotationsachse R einen engsten Durchmesserbereich 11 (radiale Einschnürung) des Mahlrings 1.2 (vgl. insbesondere auch Fig. 5) und erstrecken sich zu beiden Axialseiten entlang der Rotationsachse bezogen auf die Rotationsachse in radialer Richtung nach außen, um diesen engsten Durchmesserbereich in radialer Richtung zu überragen. Der engste Durchmesserbereich 11 befindet sich somit axial entlang der Rotationsachse R zwischen den später noch zu erläuternden beiden Mahlspalten SP1 und SP2.

Oberhalb des Mahlelementes 1.1. befindet sich ein als Einzugsschnecke ausgebildetes Förderelement 6, welches drehefest mit dem Mahlelement 1.1. verbunden ist und dafür Sorge trägt, das dass Mahlgut, hier Kaffeebohnen, von oben nach unten in den ersten Mahlspalt eingezogen wird/werden. Förderelement 6, Mahlelement 1.1. und Mahlscheibe 1.3 sind im montierten Zustand axial durchsetzt von einer Schraube 7 und mit dieser an einem axial nach oben weisenden Dorn eines Mitnehmerrades 2 fixiert. Bei dem Mitnehmerrad 2 handelt es sich um eine sogenannte Auswerferscheibe, mit welcher aus dem zweiten Mahlspalt austretendes Kaffeemehl in radialer Richtung nach außen hin zu einem unten links zu sehenden Kanal gefördert wird, über den das Kaffeemehl über eine nicht gezeigte Brüheinheit wandert. Die Auswerferscheibe 2 ist gleichzeitig Bestandteil einer Rutschkupplung, die das Mahlwerk 1 mit dem nicht gezeigten elektromotorischen Antriebsmotor koppelt. In Fig. 1 ist ferner ein unterhalb der Auswerferscheibe 2 angeordneter Dichtring 8 sowie ein unterer Gehäuseteil 4 zu erkennen, welcher mit einem oberen Gehäuseteil 3 montierten Zustand zusammenwirkt. Zwischen dem oberen Gehäuseteil 3 und dem unteren Gehäuseteil 4 befindet sich ein Befestigungsring 5.

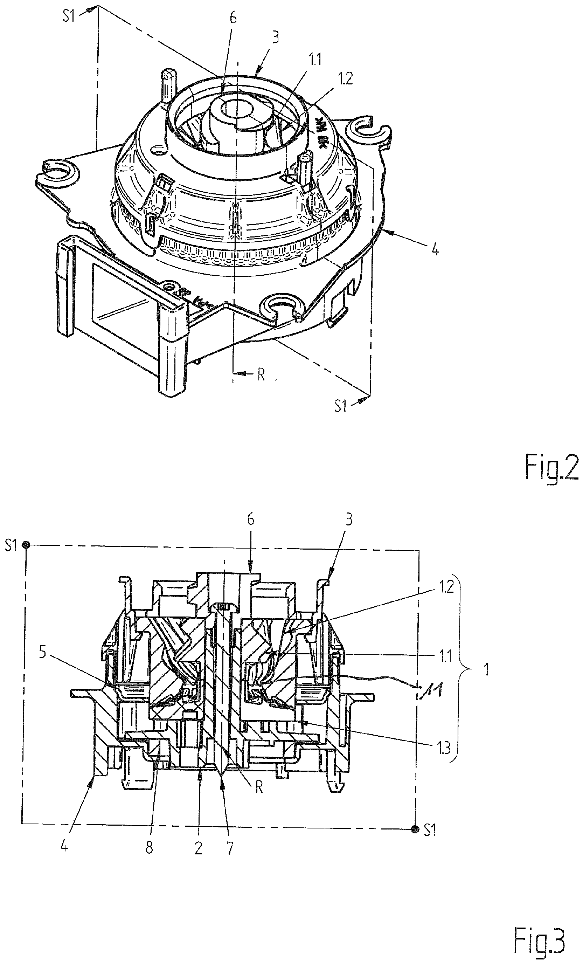

Fig. 2 zeigt sämtliche Komponenten aus Fig. 1 im zusammengefügten Zustand also eine hier als Kaffeemühle ausgebildete Mühle mit einem in der Zeichnungsebene oberen Einlassbereich, durch welchen mittels des Förderelementes 6 Mahlgut, hier Kaffeebohnen aus einem Vorratsbehälter in den darunter befindlichen ersten Mahlspalt eingezogen werden können, wobei das zerkleinerte Mahlgut, hier Kaffeemehl, über den in der Zeichnungsebene unten links gezeigten Kanal in die Brüheinheit wandern kann.

Fig. 3 zeigt die Kaffeemühle in einer Schnittebene S1. Zu erkennen ist insbesondere hier das Mahlwerk 1 mit dem innerhalb des Mahlrings 1.2 angeordneten Mahlelement 1.1. und der unterhalb dieser Zeile befindlichen Mahlscheibe 1.3, die mit dem Mahlring 1.2 einen im Wesentlichen sich radial erstreckenden zweiten Mahlspalt begrenzt. Mahlelement 1.1. und Mahlscheibe 1.3 sind aufgrund ihrer axialen Kopplung drehfest verbunden und können gemeinsam angetrieben werden.

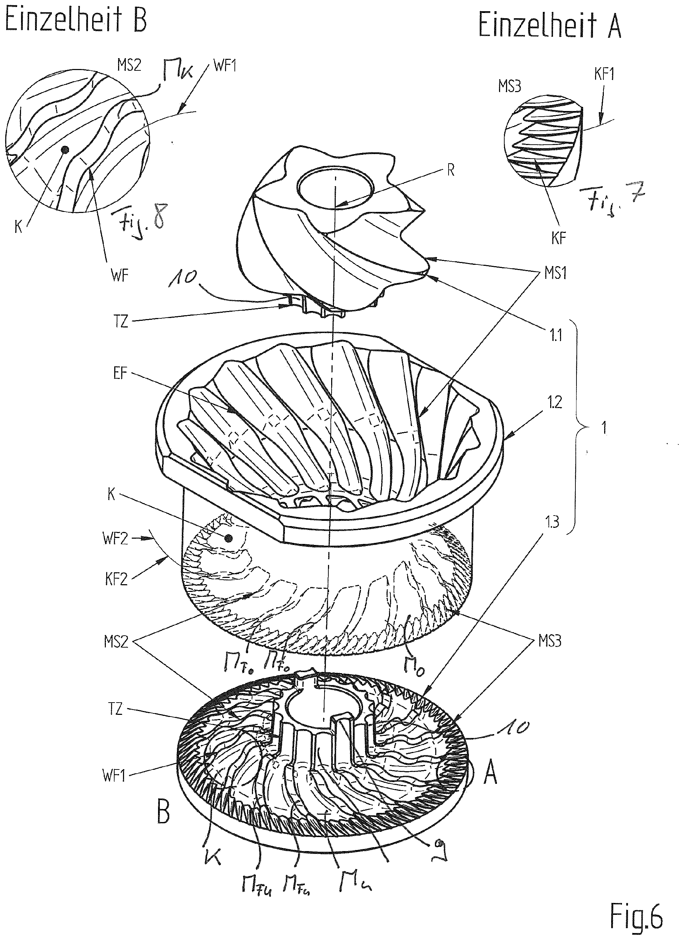

Fig. 4 zeigt nun isoliert das Mahlwerk 1 mit den konzentrisch zur Rotationsachse R angeordneten Komponenten, nämlich dem Mahlelement 1.1 dem radial außerhalb von diesem befindlichen Mahlring sowie die darunter befindliche Mahlscheibe 1.3. Fig. 5 zeigt dann eine Schnittansicht entlang der Schnittebene S2 gemäß Fig. 4, während Fig. 6 eine Explosionsdarstellung der Komponenten 1.1., 1.2 und 1.3 zeigt, mit Detailvergrößerungen von Einzelheiten A bzw. B in den Figuren 7 und 8, wobei im Folgenden der Detailaufbau des Mahlwerks 1 anhand der Zusammenschau der Fig. 5 bis 7 erläutert wird.

In Fig. 5 ist zu erkennen, dass Mahlelement 1.1 und Mahlscheibe 1.3 unmittelbar axial über Kopplungsmittel 9 ineinandergreifen und somit drehfest miteinander verbunden sind.

Zu erkennen ist zudem, dass der Außenumfang des als Mahlkegel ausgebildeten Mahlelementes und der Innenumfang des Mahlrings 1.2. einen ersten Mahlspalt SP1 begrenzen, der sich im Wesentlichen in axialer Richtung entlang der Rotationsachse R von oben nach unten entlang einer ersten Mahlspaltachse A₁ erstreckt und der in einen als Transferzone ausgebildeten Zwischenbereich TZ mündet, welcher von allen drei Komponenten 1,1; 1,2 und 1,3 begrenzt ist. Der Zwischenbereich TZ ist gleichzeitig als (Richtungs-) Umlenkbereich für Mahlgut ausgebildet, da in diesem das im ersten Mahlspalt SP1 vorgemahlene Mahlgut umgelenkt wird und zwar von einer im Wesentlichen axialen Orientierung bzw. Bewegungsrichtung in eine im Wesentlichen radiale Orientierung bzw. Bewegungsrichtung nach radial außen in den zweiten Mahlspalt SP2 hinein, der von einer Oberseite der Mahlscheibe 1.3 und einer dieser zugewandten Unterseite des Mahlrings 1.2 begrenzt ist. Der zweite Mahlspalt SP2 erstreckt sich entlang einer zweiten Mahlachse A₂, wobei erste und zweite Mahlachse A₁, A₂ einen Winkel β einschließen. Gleichzeitig schließt die erste Mahlachse A₁ mit der Rotationsachse R einen Winkel α1 ein, der deutlich kleiner ist als ein Winkel α2, den die zweite Mahlachse A₂ mit der Rotationsachse R einschließt.

In Fig. 5 ist zu erkennen, dass sich der erste Mahlspalt SP1 hin zum Zwischenbereich TZ entlang der Rotationsachse, d.h. im Wesentlichen in axialer Richtung im Hinblick auf seine im Wesentlichen radiale Spaltbreite verjüngt und einen engsten Spaltmaßbereich E₁ aufweist. Die Spaltbreite des ersten Mahlspaltes SP1 an der engsten Stelle E₁ ist geringer als das im Wesentlichen axial zu messende Spaltmaß des zweiten Mahlspaltes in seinem Eingangsbereich EI, im Übergang vom Zwischenbereich TZ und vor allem aber größer bemessen ist als ein Spaltmaß des zweiten Mahlspaltes im Bereich seines engsten Mahlspaltes.

Wie aus Fig. 5 zu entnehmen ist, gelangt vorgemahlenes Mahlgut aus dem erstem Mahlspalt im Wesentlichen in axialer Richtung entlang der Rotationsachse von oben nach unten in den Zwischenbereich TZ und wird dann um hier beispielhaft etwa 90° nach radial außen umgelenkt in den zweiten Radialspalt SP2 hinein und tritt aus diesem in radialer Richtung aus, nämlich aus einem Bereich axial zwischen dem Mahlring 1.2. und der Mahlscheibe 1.3 und gelangt dann auf das Mitnehmerrad 2, d.h. die Auswerferscheibe die gemeinsam mit der Mahlscheibe 1.3 rotiert. Zu erkennen ist, dass sich der zweite Mahlspalt entlang seiner Längserstreckung entgegen der zweiten Mahlspaltachse A₂ von radial innen nach radial außen im Wesentlichen keilförmig verjüngt.

Zu erkennen ist in Fig. 5 auch ein oberes Mahlprofil M_{U} an der Unterseite des Mahlrings 1.2 und ein diesem zugewandtes unteres Mahlprofil M_{O} an der Oberseite der Mahlscheibe 1.3.

Das untere Mahlprofil M_{U} zeichnet sich aus durch eine Vielzahl von in Umfangsrichtung beabstandeten und sich in radialer Richtung nach außen sowie schräg nach unten erstreckenden Kanälen K für den Mahlguttransport, wobei jeder Kanal K in den Umfangsrichtungen begrenzt ist von zwei in Umfangsrichtung beabstandeten, unteren Mahlflanken M_{FU}, die in dem gezeigten Ausführungsbeispiel nicht geradlinig in radialer Richtung verlaufen, sondern in Umfangsrichtung gekrümmt sind, hier entgegen einer Antriebs- bzw. Umdrehungsrichtung von Mahlscheibe 1.3 und Mahlelement 1.1.

Das obere Mahlprofil M_{O} umfasst analog obere Mahlflanken M_{FO}, wobei auch hier jeweils zwei in Umfangsrichtung beabstandete obere Mahlflanken M_{FO} einen Mahlgutkanal begrenzen. Die oberen Mahlflanken M_{FO} sind in die entgegengesetzte Umfangsrichtung gekrümmt wie die unteren Mahlflanken M_{FU}.

Der sich hieraus ergebende geschwungene bzw. gekrümmte Verlauf des nutförmigen Kanals K ist mit dem Bezugszeichen WF1, auf dem unteren Mahlprofil M_{U} gekennzeichnet, während der geschwungene Verlauf in die entgegengesetzte Umfangsrichtung der oberen Kanäle mit WF2 gekennzeichnet ist. Durch das Zusammenwirken der beiden geschwungenen Formen WF1 und WF2 entsteht beim Schneiden ein Schnittdruck welcher das Mahlgut nach außen ablenkt und dadurch beschleunigt.

Mit WF ist eine wellenförmige Konturierung von der stirnseitigen Mahlflankekante gezeigt. Sowohl die Mahlflankenkanten der oberen Mahlflanken als auch der unteren Mahlflanken sind gewellt, wobei sich Wellentäler und Wellenberge in axialer Richtung erstrecken und Wellenberge des oberen Mahlprofils bei der Rotation durch Wellentäler des unteren Profils in Umfangsrichtung gleiten und umgekehrt.

Aus Fig. 6 ist auch die Konturierung der Mahlscheibe 1.3 sowie des Mahlelementes 1.2 im Bereich des Zwischenbereichs TZ gezeigt. Zu erkennen ist hier eine Ausgestaltung von Mitnahmemitteln 10 als Verzahnung, die das vorgemahlene Mahlgut in Bewegung hält und dabei hilft dieses in den zweiten Mahlspalt zu befördern. Für den alternativen Fall der Rotation des Mahlrings ist es bevorzugt, entsprechende Mitnahmemittel am Innenumfang des Mahlrings vorzusehen, d.h. jeweils an dem bzw. den rotierenden Teil/Teilen.

Es ist zu erkennen, dass die Kanäle K in radialer Richtung nach außen übergehen in eine Endmahlstufe MS3, die eine Vielzahl von in Umfangsrichtung nebeneinander angeordneten Keilprofile KF aufweist, die nach radial außen, bevorzugt hin gegen Null auslaufen. Jedem Kanal K sind dabei eine Vielzahl solcher Keilprofile zugeordnet, d.h. zwei benachbarte Keilprofile sind deutlich geringer in Umfangsrichtung beabstandet als die die Kanäle begrenzenden Mahlflanken M_{FU} bzw. M_{FO.}

Ingesamt ergeben sich bei dem erfindungsgemäßen Mahlwerk bei zwei Mahlspalten SP2 und SP1 drei Mahlstufen, nämlich eine Vormahlstufe MS1 im ersten Mahlspalt SP2 sowie eine zweite Mahlstufe MS2 im ersten Abschnitt des zweiten Mahlspaltes, wobei hier vorzerkleinertes Mahlgut, d.h. grobes Mehl auf dem Weg nach radial außen immer feiner gemahlen wird. In dem konkreten Ausführungsbeispiel schließt dann die Endmahlstufe MS3 an, aus der dann fein zerkleinertes Mahlgut in radialer Richtung ausgestoßen wird, wobei etwaige, die dritte Mahlstufe MS3 noch erreichende große Körner schonend zerkleinert werden.

Bevorzugt lässt sich gleichzeitig die Spaltbreite des ersten Mahlspaltes SP1 als auch eine Spaltbreite des zweiten Mahlspaltes SP2 durch Relativverstellen, insbesondere entlang der Rotationsachse R der relativ zueinander rotierenden Komponenten einstellen, also ganz besonders bevorzugt ein Relativverstellen des Mahlrings 1.2 zu dem Mahlelement 1.1 und der Mahlscheibe 1.3, entweder durch aktives Verstellen des Mahlrings 1.2 oder von der Mahlscheibe 1.3 gemeinsam mit dem Mahlelement 1.1.

Mit dem Bezugszeichen EF sind Vorbruchkanten eines Mahlprofils hier, des Mahlrings des ersten Mahlspaltes gezeigt. Die Vorbruchkanten EF sind mit einem positiven Winkel in axialer Richtung versehen, um die Kaffeebohnen möglichst rasch einzuziehen. Die Kanten EF sind dabei bewusst stumpf ausgebildet, damit beim Vorbrechen möglichst wenige Feinanteile (Staub) entstehen.

Bei der zuvor in den Figuren beschriebenen bevorzugten Ausführungsvariante eines Mahlwerks, sind Mahlscheibe 1.3 und Mahlelement 1.1 als voneinander separate Bauteile ausgebildet, die in axialer Richtung gekoppelt sind, um auf diese Weise den engsten Durchmesserbereich des Mahlrings 1.2 zu durchsetzen. Bei einer alternativen, nicht im Detail gezeigten Ausführungsform ist auch eine monolithische (einteilige) Ausbildung von Mahlelement 1.1 und Mahlscheibe 1.3 möglich, auch wenn diese einteilige Kombination einen engsten Durchmesserbereich des Mahlrings 1.3 durchsetzt. Aus Montagegründen ist dann bevorzugt der Mahlring 1.3 aus mehreren in Umfangsrichtung um die Rotationsachse R zusammengesetzten Mahlteilen (Ringsegmenten), die bevorzugt fest miteinander verbunden werden oder von außen fest aneinander gehalten werden, zusammengesetzt.

### Bezugszeichenliste

- 1: Mahlwerk
- 1.1: Mahlelement, insbesondere Mahlkegel
- 1.2: Mahlring
- 1.3: Mahlscheibe
- 2: Mitnehmerrad
- 3: oberes Gehäuseteil
- 4: unteres Gehäuseteil
- 5: Befestigungsring
- 6: Förderelement (bevorzugt Förderschnecke)
- 7: Schraube
- 8: Dichtungsring
- 9: Kopplungsmittel
- 10: Mitnahmemittel
- 11: engster Durchmesserbereich
- SP1: erster Mahlspalt
- SP2: zweiter Mahlspalt
- TZ: Zwischenbereich
- A₁: erste Mahlachse
- A₂: zweite Mahlachse
- E₁: engster Spaltbereich des ersten Mahlspaltes
- E₂: engster Spaltbereich des zweiten Mahlspaltes
- EI: Eingangsbereich zweiter Mahlspalt
- M_{O}: oberes Mahlprofil des zweiten Mahlspaltes
- M_{U}: unters Profil des zweiten Mahlspaltes
- M_{FU}: untere Mahlflanken
- M_{FO}: obere Mahlflanken

- β: Winkel zwischen A₁ und A₂
- α1: Winkel zwischen A₁ und R
- α2: Winkel zwischen A₂ und R

- K: obere und untere Kanäle (Nuten)
- WF: wellenförmiger Verlauf der Mahlflankenkanten
- MK: obere und untere Mahlflankenkanten
- KF1: in Umfangsrichtung geschwungene Form der unteren Mahlflanken bzw. der unteren Mahlflankenkanten sowie der keilförmigen Profilelemente
- KF2: in Umfangsrichtung geschwungene Form des Mahlprofils bzw. der oberen Mahlflanken
- WF: Wellenform der Mahlflankenkanten bzw. Schneidkanten
- WF1: in Umfangsrichtung geschwungene bzw. gekrümmte Form der Kanäle des unteren Mahlprofils
- WF2: geschwungene Form der Kanäle des oberen Mahlprofils

- MS1: erste Mahlstufe
- MS2: zweite Mahlstufe
- MS3: Endmahlstufe

- EF: Vorbruchkanten des ersten Mahlprofils
- R: Rotationsachse

## Patentansprüche

1. Mahlwerk zum Mahlen von Mahlgut, insbesondere Kaffeebohnen, mit einen Mahlring (1.2) und einem innerhalb des Mahlrings (1.2) angeordneten, bevorzugt als Mahlkegel (1.1) ausgebildeten, Mahlelement (1.1), wobei Mahlring (1.2) und Mahlelement (1.1) relativ zueinander um eine Rotationsachse (R) verdrehbar sind, um in einem von dem Mahlring (1.2) und dem Mahlelement (1.1) begrenzten ersten Mahlspalt (SP1) Mahlgut zu mahlen, wobei dem ersten Mahlspalt (SP1) ein zweiter Mahlspalt (SP2) nachgeordnet ist, um das aus dem ersten Mahlspalt (SP1) austretende, vorgemahlene Mahlgut weiter zu zerkleinern, und wobei der zweite Mahlspalt (SP2) von einer entlang der Rotationsachse (R) zu dem, bevorzugt metallischen oder keramischen, Mahlring (1.2) und/oder dem, bevorzugt metallischen oder keramischen, Mahlelement (1.1) benachbart angeordneten, bevorzugt metallischen oder keramischen, Mahlscheibe (1.3) begrenzt ist,
**dadurch gekennzeichnet,**
**dass** die Kombination aus Mahlscheibe (1.3) und Mahlelement (1.1) einen engsten Durchmesserbereich (11) des Mahlrings (1.2) in axialer Richtung entlang der Rotationsachse (R) durchsetzt und zu beiden Axialseiten entlang der Rotationsachse (R) den engsten Durchmesserbereich in radialer Richtung nach außen überragt.

2. Mahlwerk nach Anspruch 1,
**dadurch gekennzeichnet,**
**dass** die Mahlscheibe (1.3) als von dem Mahlelement (1.1) separates Bauteil ausgebildet und drehfest, insbesondere in axialer Richtung entlang der Rotationsachse (R), mit dem Mahlelement (1.1) gekoppelt ist oder dass Mahlscheibe (1.3) und Mahlelement (1.1) monolithisch ausgebildet sind.

3. Mahlwerk nach einem der vorhergehenden Ansprüche,
**dadurch gekennzeichnet,**
**dass** der Mahlring in Umfangsrichtung um die Rotationsachse (R) betrachtet als monolithischer Ring ausgebildet ist oder aus mindestens zwei in Umfangsrichtung benachabarten Ringsegmenten zusammengefügt ist.

4. Mahlwerk nach einem der vorhergehenden Ansprüche,
**dadurch gekennzeichnet,**
**dass** der zweite Mahlspalt (SP2) von dem Mahlring (1.2), insbesondere einer Mahlringunterseite, und/oder einem drehfest mit dem Mahlring (1.2) gekoppelten axial entlang der Rotationsachse (R) benachbarten, bevorzugt unterhalb des Mahlrings (1.2) angeordneten, Mahlteil begrenzt ist.

5. Mahlwerk nach einem der vorhergehenden Ansprüche,
**dadurch gekennzeichnet,**
**dass** sich der erste Mahlspalt (SP1) hin zum zweiten Mahlspalt (SP2) und/oder hin zu einem, bevorzugt als Umlenkbereich zum Bewirken eines Richtungswechsels des Mahlgutes in radialer Richtung ausgebildeter, Zwischenbereich (TZ) zwischen dem ersten und dem zweiten Mahlspalt (SP1, SP2) verjüngt, wobei der Zwischenbereich (TZ) ein größeres Spaltmaß aufweist als der erste Mahlspalt (SP1) in seinem engsten Mahlabschnitt und dass sich der zweite Mahlspalt (SP2) ausgehend von dem Zwischenbereich (TZ) in Richtung eines zweiten Mahlspaltauslasses verjüngt.

6. Mahlwerk nach Anspruch 5,
**dadurch gekennzeichnet,**
**dass** der zweite Mahlspalt (SP2) in einem Einlassbereich eine größere Spaltbreite aufweist als der erste Mahlspalt (SP1) in seinem engsten Mahlabschnitt und/oder dass der zweite Mahlspalt (SP2) in seinem engsten Mahlabschnitt ein geringeres Spaltmaß aufweist als der erste Mahlspalt (SP1) in seinem engsten Mahlabschnitt.

7. Mahlwerk nach einem der Ansprüche 5 oder 6,
**dadurch gekennzeichnet,**
**dass** dem Zwischenbereich (TZ) rotierbare, insbesondere am Mahlelement (1.1) und/oder der Mahlscheibe (1.3) angeordnete, Mitnahmemittel (10) zum Mitnehmen von Mahlgut zugeordnet sind.

8. Mahlwerk nach einem der vorhergehenden Ansprüche,
**dadurch gekennzeichnet,**
**dass** sich der erste Mahlspalt (SP1) entlang einer ersten Mahlachse (A₁) erstreckt, und sich der zweite Mahlspalt (SP2) entlang einer winklig zur ersten Mahlachse (A₁) ersteckenden zweiten Mahlachse (A₂) erstreckt.

9. Mahlwerk nach einem der vorhergehenden Ansprüche,
**dadurch gekennzeichnet,**
**dass** der erste Mahlspalt (SP1) in axialer Richtung ausmündet und/oder dass der zweite Mahlspalt (SP2) in radialer Richtung, bevorzugt nach außen, ausmündet, und/oder dass sich der zweite Mahlspalt (SP2) von einem radial inneren Bereich nach radial außen erstreckt, bevorzugt derart, dass die zweite Mahlachse (A₂) mit einer sich senkrecht zur Rotationsachse (R) erstreckenden Radialebene einen Winkel zwischen 2° und 45°, bevorzugt zwischen 2° und 20° einschließt.

10. Mahlwerk nach einem der vorhergehenden Ansprüche,
**dadurch gekennzeichnet,**
**dass** der zweite Mahlspalt (SP2) begrenzt wird von einem oberen und einem unteren Mahlprofil (M_{U}), wobei das obere und/oder das untere Mahlprofil (M_{O}, M_{U}) eine Mehrzahl von in Umfangsrichtung um die Rotationsachse (R) beabstandeten und sich entlang der Mahlspaltlängserstreckung erstreckende Mahlflanken (M_{FU}, M_{FO}) aufweist, und dass jeweils zwei in Umfangsrichtung beabstandete der Mahlflanken (M_{FU}, M_{FO}) einen, bevorzugt nutförmigen, Mahlgutkanal begrenzen.

11. Mahlwerk nach Anspruch 10,
**dadurch gekennzeichnet,**
**dass** Mahlflankenkanten (MK) des oberen und/oder unteren Mahlprofils (M_{O}, M_{U}) zur Vergrößerung der wirksamen Oberfläche einen gewellten Verlauf aufweisen, insbesondere derart, dass Wellenberge der oberen Mahlflanken (M_{O}) in Wellentäler der unteren Mahlflanken (M_{FO}) eingreifen.

12. Mahlwerk nach einem der Ansprüche 10 oder 11,
**dadurch gekennzeichnet,**
**dass** die oberen und die unteren Mahlflanken (M_{FO}, M_{FU}) entlang ihrer jeweiligen Längserstreckung in einander entgegengesetzte Umfangsrichtungen um die Rotationsachse (R) gekrümmt sind.

13. Mahlwerk nach einem der Ansprüche 10 bis 12,
**dadurch gekennzeichnet,**
**dass** die Mahlgutkanäle in eine Endmahlstufe (MS3) ausmünden, die eine Vielzahl von in Umfangrichtung nebeneinander angeordneten Keilprofileiementen aufweist, wobei zumindest einem der Kanäle, bevorzugt jedem der Kanäle, eine Vielzahl von Keilprofilelementen zugeordnet ist.

14. Mühle mit einem, bevorzugt in einem Gehäuse angeordneten, Mahlwerk (1) nach einem der vorhergehenden Ansprüche sowie einem, insbesondere elektromotorischen, Antrieb zum Antreiben des Mahlwerks.

15. Kaffeezubereitungsvorrichtung mit einer Brüheinrichtung zum Auslaugen von gemahlenen Kaffeebohnen und einer integrierten Mühle nach Anspruch 14 zum Mahlen der Kaffeebohnen gemäß einem der vorhergehenden Ansprüche.

16. Verfahren zum Mahlen von Mahlgut, insbesondere Kaffeebohnen, unter Verwendung eines Mahlwerks (1) nach einem der Ansprüche 1 bis 13 oder einer Mühle nach Anspruch 14 oder einer Kaffeezubereitungsvorrichtung gemäß Anspruch 15, wobei Mahlgut dem ersten Mahlspalt (SP1) zugeführt und in diesem vorgemahlen wird,
**dadurch gekennzeichnet,**
**dass** das vorgemahlene Mahlgut, insbesondere über einen durchmessererweiterten Zwischenbereich (TZ), dem zweiten Mahlspalt (SP2) zugeführt und dort weiter zerkleinert wird.

## Claims

1. A grinder for grinding material to be ground, in particular coffee beans, the grinder comprising a grinding ring (1.2) and a grinding element (1.1) disposed inside the grinding ring (1.2) and preferably realized as a grinding cone (1.1), the grinding ring (1.2) and the grinding element (1.1) being rotatable in relation to one another about an axis of rotation (R) in order to grind the material to be ground in a first grinding gap (SP1) which is delimited by the grinding ring (1.2) and the grinding element (1.1), a second grinding gap (SP2) being disposed downstream of the first grinding gap (SP1) in order to grind the pre-ground material leaving the first grinding gap (SP1) finer, and the second grinding gap (SP2) being delimited by a preferably metallic or ceramic grinding disc (1.3) disposed adjacent to the preferably metallic or ceramic grinding ring (1.2) and/or to the preferably metallic or ceramic grinding element (1.1) along the axis of rotation (R),
**characterized in that**
the combination of the grinding disc (1.3) and the grinding element (1.1) penetrates a narrowest diameter section (11) of the grinding ring (1.2) in the axial direction along the axis of rotation (R) and that said combination projects outwards in the radial direction beyond the narrowest diameter section at both axial sides along the axis of rotation (R).

2. The grinder according to claim 1,
**characterized in that**
the grinding disc (1.3) is realized as a component which is separate from the grinding element (1.1) and that said grinding disc is coupled to the grinding element (1.1) in a non-rotatable manner, in particular in the axial direction along the axis of rotation (R), or that the grinding disc (1.3) and the grinding element (1.1) are realized in a monolithic manner.

3. The grinder according to any one of the preceding claims,
**characterized in that**
the grinding ring is realized as a monolithic ring in the circumferential direction about the axis of rotation (R) or that said grinding ring is composed of at least two ring segments which are disposed adjacent to one another in the circumferential direction.

4. The grinder according to any one of the preceding claims,
**characterized in that**
the second grinding gap (SP2) is delimited by the grinding ring (1.2), in particular a bottom of the grinding ring, and/or by a grinding component which is coupled to the grinding ring (1.2) in a non-rotatable manner and which is adjacent to, preferably disposed below the grinding ring (1.2) in the axial direction along the axis of rotation (R).

5. The grinder according to any one of the preceding claims,
**characterized in that**
the first grinding gap (SP1) tapers towards the second grinding gap (SP2) and/or towards an intermediate area (TZ) between the first and the second grinding gap (SP1, SP2), which is preferably realized as a diversion area for causing a change in direction of the material to be ground in the radial direction, the intermediate area (TZ) having a larger gap size than the first grinding gap (SP1) in its narrowest grinding section, and that the second grinding gap (SP2) tapers from the intermediate area (TZ) towards a second grinding gap outlet.

6. The grinder according to claim 5,
**characterized in that**
the second grinding gap (SP2) has a larger gap size in an inlet area than the first grinding gap (SP1) in its narrowest grinding section and/or that the second grinding gap (SP2) has a smaller gap size in its narrowest grinding section than the first grinding gap (SP1) in its narrowest grinding section.

7. The grinder according to claim 5 or 6,
**characterized in that**
the intermediate area (TZ) is assigned rotatable transfer means (10) for transferring the material to be ground, said transfer means being, in particular, disposed at the grinding element (1.1) and/or at the grinding disc (1.3).

8. The grinder according to any one of the preceding claims,
**characterized in that**
the first grinding gap (SP1) extends along a first grinding axis (A₁) and that the second grinding gap (SP2) extends along a second grinding axis (A₂) which extends in an angular manner to the first grinding axis (A₁).

9. The grinder according to any one of the preceding claims,
**characterized in that**
the first grinding gap (SP1) discharges in the axial direction and/or that the second grinding gap (SP2) discharges in the radial direction, preferably in the outward direction, and/or that the second grinding gap (SP2) extends outwards in the radial direction from a radially inner section, preferably in such a manner that the second grinding axis (A₂) and a radial plane which extends perpendicular to the axis of rotation (R) form an angle of 2° to 45°, preferably of 2° to 20°, between them.

10. The grinder according to any one of the preceding claims,
**characterized in that**
the second grinding gap (SP2) is delimited by an upper and a lower grinding profile (M_{U}), the upper and/or the lower grinding profile (M_{O}, M_{U}) having a plurality of grinding flanks (M_{FU}, M_{FO}) which are spaced around the axis of rotation (R) in the circumferential direction and which extend along the longitudinal extension of the grinding gap, and that each two grinding flanks (M_{FU}, M_{FO}) spaced in the circumferential direction delimit a channel for material to be ground, which is preferably groove-shaped.

11. The grinder according to claim 10,
**characterized in that**
the edges (MK) of the grinding flanks of the upper and/or lower grinding profile (M_{O}, M_{U}) extend in a corrugated manner in order to enlarge the effective surface area, in particular in such a manner that corrugation peaks of the upper grinding flanks (M_{FO}) engage into corrugation troughs of the lower grinding flanks (M_{FU}).

12. The grinder according to claim 10 or 11,
**characterized in that**
the upper and the lower grinding flanks (M_{FO}, M_{FU}) are curved along their respective longitudinal extension in opposite circumferential directions about the axis of rotation (R).

13. The grinder according to any one of claims 10 to 12,
**characterized in that**
the channels for material to be ground discharge into a final grinding stage (MS3) which comprises a plurality of wedge profile elements which are disposed adjacent to one another in the circumferential direction, at least one of the channels, preferably all channels, being assigned a plurality of wedge profile elements.

14. A mill comprising a grinder (1) according to any one of the preceding claims, said grinder preferably being disposed in a housing, and a drive, in particular an electromotive drive, for driving the grinder.

15. A coffee preparation device comprising a brewing unit for leaching ground coffee beans and an integrated mill according to claim 14 for grinding the coffee beans according to any one of the preceding claims.

16. A method for grinding material to be ground, in particular coffee beans, by using a grinder (1) according to any one of claims 1 to 13 or a mill according to claim 14 or a coffee preparation device according to claim 15, material to be ground being supplied to the first grinding gap (SP1) and being pre-ground in said first grinding gap,
**characterized in that**
the pre-ground material to be ground is supplied to the second grinding gap (SP2), in particular via an intermediate area (TZ) of enlarged diameter, and is ground finer in said second grinding gap.

## Revendications

1. Broyeur servant à broyer un produit à broyer, notamment des grains de café, le broyeur comprenant une bague de broyage (1.2) et un élément de broyage (1.1) disposé dans la bague de broyage (1.2) et réalisé, de préférence, comme cône de broyage (1.1), la bague de broyage (1.2) et l'élément de broyage (1.1) pouvant tourner l'une par rapport à l'autre autour d'un axe de rotation (R) afin de broyer un produit à broyer dans une première fente de broyage (SP1) qui est limitée par la bague de broyage (1.2) et l'élément de broyage (1.1), une deuxième fente de broyage (SP2) étant disposée en aval de la première fente de broyage (SP1) afin de broyer plus finement le produit à broyer pré-broyé qui sort de la première fente de broyage (SP1), et la deuxième fente de broyage (SP2) étant limitée par un disque de broyage (1.3), de préférence métallique ou céramique, disposé adjacent à la bague de broyage (1.2), de préférence métallique ou céramique, et/ou à l'élément de broyage (1.1), de préférence métallique ou céramique, le long de l'axe de rotation (R)
**caractérisé en ce que**
la combinaison du disque de broyage (1.3) et de l'élément de broyage (1.1) traverse une partie de diamètre (11) la plus étroite de la bague de broyage (1.2) dans la direction axiale le long de l'axe de rotation (R) et que ladite combinaison dépasse vers l'extérieur de la partie de diamètre la plus étroite dans la direction radiale des deux côtés axiaux le long de l'axe de rotation (R).

2. Broyeur selon la revendication 1,
**caractérisé en ce que**
le disque de broyage (1.3) est réalisé comme un élément séparé de l'élément de broyage (1.1) et que ledit disque de broyage est couplé à l'élément de broyage (1.1) de manière non-rotative, notamment dans la direction axiale le long de l'axe de rotation (R), ou que le disque de broyage (1.3) et l'élément de broyage (1.1) sont réalisés de manière monolithique.

3. Broyeur selon l'une quelconque des revendications précédentes,
**caractérisé en ce que**
la bague de broyage est réalisée comme bague monolithique dans la direction circonférentielle autour de l'axe de rotation (R) ou que ladite bague de broyage est composée d'au moins deux segments de bague disposés de manière adjacente dans la direction circonférentielle.

4. Broyeur selon l'une quelconque des revendications précédentes,
**caractérisé en ce que**
la deuxième fente de broyage (SP2) est limitée par la bague de broyage (1.2), notamment par une face inférieure de la bague de broyage, et/ou par un composant de broyage qui est couplé à la bague de broyage (1.2) de manière non-rotative et qui est adjacent à, de préférence disposé au-dessous de la bague de broyage (1.2) dans la direction axiale le long de l'axe de rotation (R).

5. Broyeur selon l'une quelconque des revendications précédentes,
**caractérisé en ce que**
la première fente de broyage (SP1) se rétrécit vers la deuxième fente de broyage (SP2) et/ou vers une partie intermédiaire (TZ) entre la première et la deuxième fente de broyage (SP1, SP2), qui est réalisée, de préférence, comme partie de déviation destinée à entraîner un changement de direction du produit à broyer dans la direction radiale, la partie intermédiaire (TZ) ayant une plus grande dimension de fente que la première fente de broyage (SP1) dans sa partie de broyage la plus étroite et que la deuxième fente de broyage (SP2) se rétrécit en partant de la partie intermédiaire (TZ) vers une deuxième sortie de la fente de broyage.

6. Broyeur selon la revendication 5,
**caractérisé en ce que**
la deuxième fente de broyage (SP2) a une plus grande largeur de fente dans une partie d'entrée que la première fente de broyage (SP1) dans sa partie de broyage la plus étroite et/ou que la deuxième fente de broyage (SP2) a une plus petite largeur de fente dans sa partie de broyage la plus étroite que la première fente de broyage (SP1) dans sa partie de broyage la plus étroite.

7. Broyeur selon la revendication 5 ou la revendication 6,
**caractérisé en ce que**
des moyens d'entraînement (10) rotatifs destinés à entraîner le produit à broyer et disposés notamment sur l'élément de broyage (1.1) et/ou sur le disque de broyage (1.3) sont assignés à la partie intermédiaire (TZ).

8. Broyeur selon l'une quelconque des revendications précédentes,
**caractérisé en ce que**
la première fente de broyage (SP1) s'étend le long d'un premier axe de broyage (A₁) et que la deuxième fente de broyage (SP2) s'étend le long d'un deuxième axe de broyage (A₂) qui s'étend de manière angulaire par rapport au premier axe de broyage (A₁).

9. Broyeur selon l'une quelconque des revendications précédentes,
**caractérisé en ce que**
la première fente de broyage (SP1) débouche dans la direction axiale et/ou que la deuxième fente de broyage (SP2) débouche dans la direction radiale, de préférence à l'extérieur, et/ou que la deuxième fente de broyage (SP2) s'étend d'une partie radialement intérieure à l'extérieur dans la direction radiale, de préférence de telle manière que le deuxième axe de broyage (A₂) et un plan radial, qui s'étend perpendiculairement à l'axe de rotation (R), forment entre eux un angle de 2° à 45°, de préférence de 2° à 20°.

10. Broyeur selon l'une quelconque des revendications précédentes,
**caractérisé en ce que**
la deuxième fente de broyage (SP2) est limitée par un profil de broyage supérieur et un profil de broyage inférieur (M_{U}), le profil de broyage supérieur et/ou le profil de broyage inférieur (M_{O}, M_{U}) ayant une pluralité de flancs de broyage (M_{FU}, M_{FO}) qui sont espacés autour de l'axe de rotation (R) dans la direction circonférentielle et qui s'étendent le long de l'extension longitudinale de la fente de broyage, et que deux flancs de broyage (M_{FU}, M_{FO}) espacés dans la direction circonférentielle limitent toujours un canal de produit à broyer, de préférence en forme de rainure.

11. Broyeur selon la revendication 10,
**caractérisé en ce que**
les bords (MK) des flancs de broyage du profil de broyage supérieur et/ou du profil de broyage inférieur (M_{O}, M_{U}) ont un tracé ondulé servant à agrandir la surface active, notamment de telle manière que des crêtes des flancs de broyage supérieurs (M_{FO}) s'engagent dans des creux des flancs de broyage inférieurs (M_{FU}).

12. Broyeur selon la revendication 10 ou la revendication 11,
**caractérisé en ce que**
les flancs de broyage supérieurs et inférieurs (M_{FO}, M_{FU}) sont courbés dans des directions circonférentielles opposées autour de l'axe de rotation (R) le long de leur extension longitudinale respective.

13. Broyeur selon l'une quelconque des revendications 10 à 12,
**caractérisé en ce que**
les canaux de produit à broyer débouchent dans un étage de broyage final (MS3) qui comprend une pluralité d'éléments de profil en forme de cale qui sont disposés adjacents les uns aux autres dans la direction circonférentielle, une pluralité d'éléments de profil en forme de cale étant assignée à au moins un des canaux, de préférence à chaque canal.

14. Moulin comprenant un broyeur (1) selon l'une quelconque des revendications précédentes, le broyer étant, de préférence, disposé dans un boîtier, et un moteur, notamment électrique, destiné à entraîner le broyeur.

15. Dispositif de préparation du café comprenant une unité d'infusion destinée à la lixiviation des grains de café broyés et comprenant un moulin intégré selon la revendication 14 destiné à broyer les grains de café selon l'une quelconque des revendications précédentes.

16. Procédé pour broyer un produit à broyer, notamment des grains de café, en utilisant un broyeur (1) selon l'une quelconque des revendications 1 à 13 ou un moulin selon la revendication 14 ou un dispositif de préparation du café selon la revendication 15, le produit à broyer étant amené à la première fente de broyage (SP1) et étant pré-broyé dans ladite fente,
**caractérisé en ce que**
le produit à broyer pré-broyé est amené à la deuxième fente de broyage (SP2), notamment par une partie intermédiaire (TZ) à diamètre élargi, et que ledit produit est broyé plus finement dans ladite deuxième fente de broyage.
